Europäisches Patentamt

European Patent Office

Office européen des brevets

(11) Publication number: **0 095 886**
**B1**

(12) **EUROPEAN PATENT SPECIFICATION**

(45) Date of publication of patent specification: **02.03.88**

(21) Application number: **83302985.3**

(22) Date of filing: **24.05.83**

(51) Int. Cl.⁴: **G 11 B 7/24**

(54) Method and apparatus for making a stamping master for video disc replication.

(30) Priority: **28.05.82 US 383176**

(43) Date of publication of application:
**07.12.83 Bulletin 83/49**

(45) Publication of the grant of the patent:
**02.03.88 Bulletin 88/09**

(84) Designated Contracting States:
**AT BE CH DE FR GB IT LI LU NL SE**

(56) References cited:
**EP-A-0 030 774**
**DE-A-2 934 343**
**US-A-3 462 762**
**US-A-3 530 441**

(73) Proprietor: **ENERGY CONVERSION DEVICES, INC.**
**1675 West Maple Road**
**Troy Michigan 48084 (US)**

(72) Inventor: **Strand, David**
**2091 Daintree**
**West Bloomfield Michigan 48033 (US)**

(74) Representative: **Grundy, Derek George Ritchie et al**
**CARPMAELS & RANSFORD 43, Bloomsbury Square**
**London WC1A 2RA (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to an improved method for making a stamping master to facilitate video disk replication.

The prior art methods currently in use generally rely on a photoresist technique. In this type of process, a photoresist coating sensitive to, for instance, laser or ultraviolet light is applied to a substrate. Selected areas of the coating, which correspond to the information to be encoded on the disk, are then subjected to the laser beam. The laser beam alters the areas of the coating upon which it impinges, making those areas more soluble to developing solvents. Those areas of the photoresist coating which were subjected to the laser light are removed while the areas of the photoresist coating not impinged upon by the light remain unaffected. A thin conductive layer is then deposited over the developed photoresist and subjected to an electroplating bath. After plating to an appropriate thickness, the plated material and the conductive layer are separated from the substrate and photoresist and used as a stamping master.

The master is used as a die to form pits in a transparent plastic base material. Next a thin reflective layer of aluminium is deposited over the plastic base material and a protective coating is placed over the aluminium layer. Finally, two such assemblies are sandwiched together to form a double sided video disk.

In information retrieval, a light beam penetrates the transparent plastic base and is focused on the surface of the aluminium reflective layer. Light reflected from inside a pit will destructively interfere with light reflected from the spaces between the pits. Thus, intensity modulation of the reflected light beam is achieved as the video disk rotates and this intensity modulation is translated back into the stored information.

The prior art methods for the manufacture of a video disk are involved and costly processes. The primary disadvantage of these processes is that they provide no means by which the accuracy of the information etched onto the master may be verified until the conductive layer is formed on the partially completed master. Only then can the accuracy be verified. Obviously, any mistakes beyond a certain limit render the master worthless. Errors cannot be corrected. Moreover, a constant, costly supply of photoresist material and processing chemicals and facilities are required.

US—A—3 530 441 relates to a method of storing and retrieving information, in which a film of semi-conductor material convertible in discrete areas between a high and a low conductivity state. The information stored on the film can be retrieved by determining the pattern of high and low conductivity areas on the film.

According to the present invention, there is provided a method of making a stamping master to facilitate video disk replication comprising:

providing a substance;

(b) vacuum depositing a thin film of material over said substrate, said material being reversibly convertible between a first electrical high conductivity, state and a second electrical low conductivity, state, said film being deposited in said low conductivity state;

(c) converting selected areas of said film from said low conductivity state to said high conductivity state in a predetermined pattern;

(d) electro-depositing on additional material onto the portion of said area of said film corresponding to said high conductivity state;

(e) forming a continuous backing layer over said additional material; and

(f) separating said backing layer and said additional material from said film, said backing layer and said additional material forming a first stamping master.

The method of the present invention, in contrast to the prior art methods, allows the coded information to be read and therefore verified for accuracy, and even corrected or erased, before the formation of the stamping master is even begun. This is achieved by using a material which is reversibly convertible between two stable states to initially receive the coded information. This information can be read for accuracy before forming the actual master.

One group of materials which exhibits variations in structure is amorphous semiconductors. Such materials are described and illustrated, for example, in US—A—3,530,441 (referred to above) and US—A—3,678,852. These amorphous semiconductor materials can be switched between two stable states in response to the application of light, electromagnetic energy or heat. In one state the material is substantially disordered, generally amorphous and has a high resistance or insulating condition. In the other state the atomic structure of the material is changed to a different local order as, for example, toward a more ordered crystalline condition having a comparatively low resistance or conducting characteristic. For the purposes of this invention one of these state will be called hereinafter the crystalline or high conductivity state and the other will be called the amorphous or low conductivity state.

Energy is selectively applied to discrete portions of the semiconductor material causing an alteration in those discrete portions from the crystalline to the amorphous state or vice versa. The conditon of those discrete portions can then be detected with respect to the surrounding areas to allow retrieval of the stored information in a nondestructive manner.

Furthermore, the method of the present invention obviates the need for the aforementioned conductive layer which is used in the prior art. This reduction in steps contributes a further savings of both time and expense as compared to the prior art.

The present invention provides a new method for making a stamping master to facilitate video disk replication wherein a thin film of material which is reversibly convertible between a high electrical conductivity state and a low electrical conductivity state, is vacuum deposited on a substrate while in the low conductivity state.

The film is deposited on a substrate to a uniform thickness, preferably between 30 and 300 nm (300Å and 3000Å), and then imaged with information in coded form by converting areas of the film to the high conductivity state in a predetermined pattern corresponding to the coded information. The conversion can be accomplished by focusing light, electromagnetic energy or heat on the film. For example, the film can be deposited on the substrate in an amorphous state. Alternatively, the film could be deposited in a crystalline state and then converted in bulk to an amorphous state to achieve low electrical conductivity. Selected areas of the film are then exposed to a focused laser beam in a predetermined pattern to effect a phase change in those areas of the film to a stable, crystalline, high conductivity state from a stable, amorphous, low conductivity state. The film material is selected to obtain a considerable difference between the electrical conductivities (e.g. approximately four orders of magnitude is acceptable) of the two states. A preferred composition for the thin film is 92% tellurium, 7% germanium and 1% oxygen.

At this stage, an intermediate subassembly composed of the imaged thin film on the substrate is produced which is extremely valuable in itself. The coded information can be read for accuracy by detecting the state of the selectively converted areas with respect to the rest of the film. This allows verification of the accuracy of the coded information before the stamping master is formed which was impossible with the prior art. Furthermore, corrections can be made by merely exposing selected areas of the film to the energy source as required.

An additional material is then electrodeposited only onto the areas of the imaged film which are in the high conductivity state and a continuous backing layer is formed over this deposited material. This is preferably accomplished by subjecting the imaged film to an electroplating bath containing, for instance, nickel. The nickel plates only onto the highly conductive crystalline areas of the film. The plating is continued until the nickel spans the areas of the film on which it did not directly plate. In this way, a continuous backing layer which is integral with the plated nickel is formed.

The nickel is then separated from the imaged material to provide a first stamping master. If the void areas of the first stamping master correspond to the coded information, the first stamping master is usable to form a second stamping master of opposite polarity to the first, preferably by a similar plating operation onto the first stamping master. The second stamping master is then used directly for video disk replication.

The preferred embodiment of this invention will now be described by way of example, with reference to the drawings accompanying this specification, in which:

Fig. 1 is a partial, cross-sectional side view of one half of a finished video disk made by the method of the present invention;

Fig. 2 is a partial, cross-sectional side view of a thin film of the convertible material in a crystalline state on a substrate;

Fig. 3 is a schematic diagram of a system for focusing a laser beam on the deposited crystalline film illustrated in Fig. 2;

Fig. 4 is a schematic illustration showing a discrete portion of the crystalline material of Fig. 2 switched to an amorphous state by the system of Fig. 3;

Fig. 5 is a partial, cross-sectional side view of the deposited film of Fig. 2 having discrete portions already switched from a crystalline state to an amorphous state;

Fig. 6 illustrates a first stage of electroplating onto the crystalline portions of the view of Fig. 5;

Fig. 7 illustrates an intermediate stage of the view of Fig. 6 where a continuous backing layer is beginning to be formed;

Fig. 8 is the sectional view of Fig. 7 where the plated material has formed the continuous backing layer; and

Fig. 9 illustrates a first stamping master delaminated from the convertible material and a second stamping master formed from, and of reversed polarity to, the first stamping master.

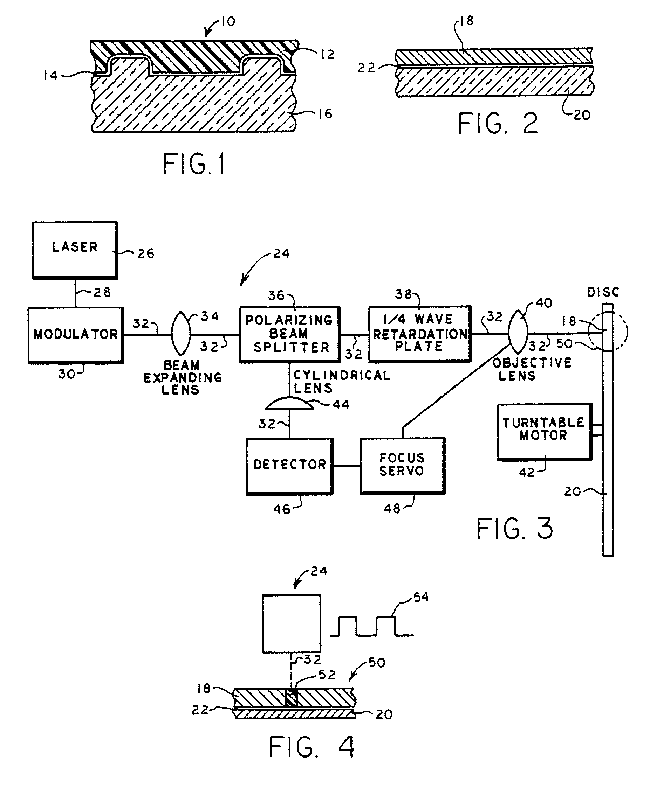

Referring now more particularly to Fig. 1, there is shown a partial, cross-sectional side view of one half of a finished video disk 10. The disk 10 comprises a transparent plastic base material 12, a reflective aluminium layer 14 and a protective coating 16. The base material 12 is covered by the thin, reflective aluminium layer 14. The protective coating 16 is deposited over the aluminium layer 14. A finished disk has two such assemblies 10 sandwiched together.

Referring now to Fig. 2 there is shown a film of reversibly convertible material 18 deposited on a delaminating layer 22 which in turn has been deposited on a substrate 20. The thin film of reversibly convertible material 18 is an amorphous semiconductor of the type described in US—A—3,530,441 and US—A—3,678,852. The film is deposited by vacuum deposition in an amorphous, low conductivity state. The film 18 in accordance with a preferred embodiment of the present invention, is converted in bulk to a crystalline, high conductivity state. This can be accomplished by exposing the film 18 to energy in the form of, for instance, a light beam, electron beam, laser beam or heat.

The thin film 18 can include tellurium, germanium, selenium, sulphur, oxygen and a metallic material. In accordance with one preferred embodiment of the present invention, the composition of the film 18 can be 92% tellurium and 7% germanium in atomic percent and may have inclusions of 1% oxygen and/or sulphur. Utilizing the above composition, the thin film 18, when deposited in an amorphous state is readily and effectively convertible in bulk to a crystalline state by heating the film 18 to 130°C for five minutes and allowing it to cool at ambient temperatures. With this material deposited to a thickness of from 30 to 300 nm (300Å to 3000Å), a desired difference in conductivity of about four orders of magnitude can be achieved between the crystalline and amorphous states.

Further compositions which can be utilized in practising the present invention can consist of the memory material disclosed in US—A—3,271,591. When using these types of materials, desired resistances in the low and high conductivity states may be obtained by appropriate selection of composition and thickness.

The substrate 20 is preferably flat with a very good surface quality. This facilitates accurate and precise deposition of the film 18 to the desired thickness. For example, a glass substrate 20 polished to a surface flatness of one half wave/ inch and with a surface quality having a scratch and dig rating of 40—20 would suffice. The delaminating layer 22 can be polyurethane which will separate easily from the glass substrate 20.

Fig. 3 is a schematic representation of one preferred embodiment of a system 24 for focusing a laser beam on the film 18 in a predetermined pattern to convert selected areas of the film 18 from a crystalline to an amorphous state. The system 24 comprises a laser source 26, a modulator 30, a beam expanding lens 34 and a polarizing beam splitter 36. The system 24 further comprises a quarter wave retardation plate 38, an objective lens 40, a cylindrical lens 44, a detector 46 and a focus servo 48. Finally, a turntable motor 42 would be utilized to rotate the substrate 20 on which the film 18 is deposited.

The laser source 26 directs a vertically polarized beam 28 to the modulator 30 which interacts with the incoming beam 28. The now modulated beam 32 is directed through the beam expanding lens 34 which insures that substantially the entire aperture of the objective lens 40 is used.

The expanding lens 34 directs the pulsed beam 32 through the polarizing beam splitter 36, which at this stage exerts no influence on the modulated pulse 32 because of the vertical polarization, and onto the quarter wave retardation plate 38. The quarter wave retardation plate 38 imparts circular polarization to the modulated laser beam 32 and transmits the modulated beam 32 through the objective lens 40 and onto the thin film 18 at a selected discrete area 52 to convert the area 52 from one state to the other. The turntable motor 42, as noted above, rotates the substrate 20 to facilitate, together with the detector 46, focus servo 48 and objective lens 40, the conversion of areas of film 18 in the predetermined pattern.

The modulated laser beam 32 is reflected off the film 18, back through the objective lens 40 and to the quarter wave plate 38 where it now becomes horizontally polarized. The quarter wave plate 38 changes the polarization of the modulated beam 32 and transmits the same back to the beam splitter 36 where the modulated beam 32 is now deflected because of its horizontal polarization. The beam splitter 36 deflects the modulated laser beam 32 through the cylindrical lens 44 and onto the detector 46. The detector 46 furnishes information to the focus servo 48 which adjusts the focus of the objective lens 40 based upon the information collected by the detector 46.

Fig. 4 schematically represents a partial cross-sectional side view of a portion 50 of film 18 from Fig. 3 along with the laser system 24 described above. Also shown are sample waveforms 54 illustrating the amplitude and duration of the modulated laser beam 32.

As noted above, the film 18 is deposited on the substrate 20 in an amorphous state and then flashed or converted in bulk to a crystalline state before selected areas of the film are converted to the amorphous state in the predetermined pattern corresponding to the coded information.

Fig. 4 illustrates the next step in a preferred embodiment of the present invention wherein a selected discrete area 52 is switched to the amorphous state by the modulated beam 32 which is focused on the film 18 by the laser system 24 of Fig. 3.

In one preferred embodiment, the selected discrete areas 52 that are converted to the amorphous state are micro-sized. In this preferred embodiment, the individual discrete areas 52 are approximately 0.8 µm in diameter with approximately a 1.6 µm track pitch or space between annular tracks of selected areas 52 on the surface of the film 18. Such size and spacing will result, by the method to be hereinafter elaborated upon, in pits or depressions on the one-half finished video disk 10 of similar size and spacing. The length of each individual discrete area 52 as well as the spacing between discrete areas 52 that are within a given annular track will similarly control the length and spacing of the pits in the one-half disk 10. It is this length and spacing of the pits which determine the information on the finished video disk 10.

The modulated laser beam 32 operates to heat the discrete area 52 of the film 18 to at least a transition temperature and alter the discrete portion 52 to, for example, an amorphous, low conductivity condition. The duration of the pulse 54 is, for example, approximately 25 to 100 nanoseconds to produce the desired change in state.

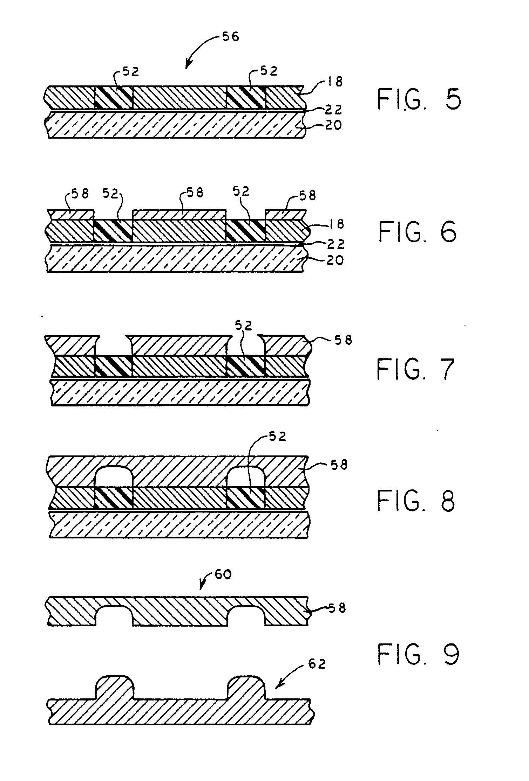

Referring now more particularly to Fig. 5, there is illustrated the thin film 18, the substrate 20 and the delaminating layer 22 therebetween. The selected areas 52 of film 18 have been converted from one state to the other by the modulated lasser beam 32 using the laser system 24 as illustrated in Fig. 4, in a predetermined pattern. The film 18 is now in a condition to serve as a template for the actual formation of the first stamping master.

At the stage represented by Fig. 5, an intermediate subassembly 56 in the present method is formed which has great value in itself. For example, at this stage, selected areas 52 of the crystalline thin film 18 have been converted in a predetermined pattern corresponding to the information to be reproduced, to an amorphous state. The single greatest value of this subassembly lies in the fact that the coded information now imaged in the thin film 18 can be read by detecting the state of the selectively converted discrete portions 52 with respect to the rest of the film 18. This capability makes possible verification of the accuracy of the imaged information at an earlier and therefore less costly stage of the manufacturing process than previously possible. Furthermore, when an error in the imaged information is discovered, the reversible nature of the thin film 18 allows corrections or even complete reimaging by merely exposing selected areas 52 of the film 18 as required.

Referring now more particularly to Fig. 6, an early stage of the deposition of an additional material 58 on the imaged film 18 is illustrated. In accordance with a preferred embodiment, the deposition is accomplished by subjecting the intermediate subassembly 56 described with respect to Fig. 5 to an electroplating bath containing nickel. In such a process, the nickel 58 will plate only onto the crystalline areas of the film 18 because of the high conductivity of these areas. The low conductivity of the selected areas 52, which were converted by the laser system 24 to an amorphous state, precludes the nickel 58 from being plated onto those selected areas 52.

The next step in the method of the present invention involves forming a continuous backing layer over the deposited nickel 58. The continuous backing layer is preferably formed by continuing the deposition of the nickel 58 as illustrated in Figs. 7 and 8. Fig. 7 illustrates an intermediate stage in this preferred process for forming the continuous backing layer wherein the nickel 58, as its deposition continues, has begun to bridge over the discrete amorphous portions 52 of the film 18 on which the nickel 58 has not been directly deposited. Fig. 8 shows the completed continuous backing layer which has been formed by the continued deposition of the nickel 58. The formation of the continuous backing layer can also be accomplished by providing a separate backing layer such as a glass or metal plate.

Referring now more particularly to Fig. 9, a partial cross-sectional side view of the preferred embodiment of the nickel 58 with its integral backing layer as illustrated in Fig. 8 is shown after delamination from the thin film 18. This structure, the deposited nickel 58 with its integral backing layer, can be used as a first stamping master 60 having a first polarity. Fig. 9 also illustrates a partial cross-sectional side view of a second stamping master 62 having a second polarity opposite that of the first master 60.

The first stamping master 60 can be used directly for video disk replication. If this is done, the one half finished video disk 10 formed from the first master 60 would have raised areas which, in combination with the surface surrounding these raised areas, would cause the intensity modulation of the reflected light beam as discussed above.

Alternatively, to arrive at what might be a more commercially acceptable form of the finished disk, the second master 62 is formed by a process similar to that described above regarding the formation of the first stamping master 60. A material is deposited onto the first stamping master 60. In accordance with one preferred embodiment, this material could again be nickel. A continuous support layer is formed, again preferably by continuing the plating of the nickel, to provide a second stamping master 62. The second master 62 is delaminated from the first stamping master 60 and used directly for disk replication.

As can be appreciated from the foregoing, the present invention provides a new method for making a stamping master for video disk replication. The method does away with the risks of wasted time, manpower and materials involved in not being able to verify the accuracy of the coded information until completion of the entire process. Furthermore, the present invention includes less steps and is therefore less expensive and less time consuming than those techniques currently in use.

**Claims**

1. A method of making a stamping master (60) to facilitate video disk (1) replication comprising:
   a) providing a substrate (20);
   b) vacuum depositing a thin film (18) of material over said substrate (20), said material being reversibly convertible between a first electrical high conductivity state and a second electrical low conductivity state, said film (18) being deposited in said low conductivity state;
   c) converting selected areas of said film (18) from said low conductivity state to said high conductivity state in a predetermined pattern (52);
   d) electro-depositing an additional material (58) onto the portion of said area of said film (18) corresponding to said high conductivity state;
   e) forming a continuous backing layer (58) over said additional material (58); and
   f) separating said backing layer and said additional material (58) from said film (18), said backing layer and said additional material forming a first stamping master (60).

2. The method of claim 1 wherein said step of depositing said thin film (18) includes depositing said film (18) to a thickness of from 30 to 300 nm (300Å to 3000Å).

3. The method of claim 1 or 2 wherein said step of depositing said thin film (18) includes depositing said film (18) in an amorphous state.

4. The method of claim 3 wherein said step c) comprises converting said deposited amorphous film (18) in bulk to a crystalline state and converting selected areas of said film from said high conductivity state in said low conductivity state in a predetermined pattern.

5. The method of claim 4 wherein said step of converting selected areas of said film (18) from said high conductivity state to said low conductivity state includes converting said selected areas from said crystalline state to said amorphous state.

6. The method of claim 5 wherein said step of depositing said additional material (58) includes depositing said additional material (58) only onto said areas in said crystalline state.

7. The method of any one of claims 1 to 6 wherein said step of converting areas of said film (18) from said low conductivity state to said high conductivity state includes focusing electromagnetic energy on said film (18) in said predetermined pattern.

8. The method of any one of claims 1 to 7 wherein the conductivity of said thin film (18) in said high conductivity state is approximately four orders of magnitude greater than its conductivity in said low conductivity state.

9. The method of any one of claims 1 to 8 wherein said electrodeposited additional material (58) includes metallic material.

10. The method of claim 9 wherein said metallic material (58) includes nickel.

11. The method of any one of claims 1 to 10 comprising the further step of forming a reversed duplicate (62) from said first stamping master (60) to provide a second stamping master with complementary surface structure.

12. The method of claim 11 wherein said step of forming said second stamping master (62) with complementary surface structure comprises the further steps of:

a) electro-depositing further material onto said electrodeposited additional material (58) of said stamping master (60);

b) forming a continuous support layer over at least part of said electrodeposited further material; and

c) separating said continuous support layer and said further electrodeposited material from said first stamping master (60) to form said reversed duplicate to provide said second stamping master (62) of opposite polarity.

13. The method of claim 12 wherein said step of depositing said further material onto said electrodeposited additional material (58) of said first stamping master (60) includes depositing said further material onto the portion of said electrodeposited additional material (58) corresponding to the high conductivity portions of said first stamping master (60).

14. The method of claim 12 or claim 13 wherein said step of forming said continuous support layer includes the step of continuing the deposition of said further material until said deposited further material forms said continuous support layer over those areas of said first stamping master (60) which correspond to those low conductivity areas of said thin film on which said additional material (58) was not deposited.

**Patentansprüche**

1. Verfahren zur Herstellung einer Matrize (60) zum Kopieren von Bildplatten (1), umfassend:

a) Bereitstellen eines Substrats (20);

b) Vakuumabscheiden eines Dünnfilms (18) auf das Substrat (20), wobei das Dünnfilmmaterial aus einem ersten, elektrisch hochleitfähigen Zustand in einen zweiten, elektrisch schwachleitfähigen Zustand reversibel überführbar ist und der Dünnfilm (18) im schwachleitfähigen Zustand abgeschieden wird;

c) Überführen ausgewählter Bereiche des Dünnfilms (18) aus dem schwachleitfähigen Zustand in den hochleitfähigen Zustand mit einem vorbestimmten Muster (52);

d) galvanisches Abscheiden eines Zusatzmaterials (58) auf dem dem hochleitfähigen Zustand entsprechenden Teil des Bereichs des Dünnfilms (18);

e) Bilden eines durchgehenden Überzugs (58) über dem Zusatzmaterial (58); und

f) Lösen des Überzugs und des Zusatzmaterials (58) von dem Dünnfilm (18), wobei der Überzug und das Zusatzmaterial eine erste Matrize (60) bilden.

2. Verfahren nach Anspruch 1, wobei beim Abscheiden des Dünnfilms (18) dieser mit einer Dicke von 30—300 nm (300—3000Å) abgeschieden wird.

3. Verfahren nach Anspruch 1 oder 2, wobei beim Abscheiden des Dünnfilms (18) dieser in amorphem Zustand abgeschieden wird.

4. Verfahren nach Anspruch 3, wobei in Schritt c) der abgeschiedene amorphe Dünnfilm (18) insgesamt in einen kristallinen Zustand überführt wird und ausgewählte Bereiche des Dünnfilms mit einem vorbestimmten Muster vom hochleitfähigen Zustand in den schwachleitfähigen Zustand überführt werden.

5. Verfahren nach Anspruch 4, wobei der Schritt der Überführung ausgewählter Bereiche des Dünnfilms (18) vom hochleitfähigen in den schwachleitfähigen Zustand umfaßt: Überführen der ausgewählten Bereiche vom kristallinen in den amorphen Zustand.

6. Verfahren nach Anspruch 5, wobei der Schritt des Abscheidens des Zusatzmaterials (58) umfaßt; Abscheiden des Zusatzmaterials (58) nur auf die im kristallinen Zustand befindlichen Bereiche.

7. Verfahren nach einem der Ansprüche 1—6, wobei der Schritt der Überführung von Bereichen des Dünnfilms (18) vom schwachleitfähigen Zustand in den hochleitfähigen Zustand umfaßt: Fokussieren elektromagnetischer Energie auf den Dünnfilm (18) entsprechend dem vorbestimmten Muster.

8. Verfahren nach einem der Ansprüche 1—7, wobei die Leitfähigkeit des Dünnfilms (18) im hochleitfähigen Zustand um etwa vier Größenordnungen höher als seine Leitfähigkeit im schwachleitfähigen Zustand ist.

9. Verfahren nach einem der Ansprüche 1—8, wobei das galvanisch abgeschiedene Zusatzmaterial (58) metallisches Material umfaßt.

10. Verfahren nach Anspruch 9, wobei das metallische Material (58) Nickel umfaßt.

11. Verfahren nach einem der Ansprüche 1—9, ferner umfassend den Schritt der Bildung eines umgekehrten Duplikats (62) von der ersten Matrize (60) unter Bildung einer zweiten Matrize mit komplementärer Oberflächenstruktur.

12. Verfahren nach Anspruch 11, wobei der Schritt der Bildung der zweiten Matrize (62) mit komplementärer Oberflächenstruktur die weiteren Schritte umfaßt:

a) galvanisches Abscheiden von weiterem Material auf das galvanisch abgeschiedene Zusatzmaterial (58) der Matrize (60);

b) Bilden einer durchgehenden Stützschicht über wenigstens einem Teil des galvanisch abgeschiedenen weiteren Materials; und

c) Lösen der durchgehenden Stützschicht und des weiteren galvanisch abgeschiedenen Materials von der ersten Matrize (60) unter Bildung des umgekehrten Duplikats zum Erhalt der zweiten Matrize (62) mit entgegengesetzter Polarität.

13. Verfahren nach Anspruch 12, wobei der Schritt des Abscheidens des weiteren Materials auf das galvanisch abgeschiedene Zusatzmaterial (58) der ersten Matrize (60) umfaßt: Abscheiden des weiteren Materials auf demjenigen Teil des galvanisch abgeschiedenen Zusatzmaterials (58), der den hochleitfähigen Bereichen der ersten Matrize (60) entspricht.

14. Verfahren nach Anspruch 12 oder 13, wobei der Schritt der Bildung der durchgehenden Stützschicht umfaßt: Fortsetzen der Abscheidung des weiteren Materials, bis das abgeschiedene weitere Material die durchgehende Stützschicht über denjenigen Bereichen der ersten Matrize (60) bildet, die den schwachleitfähigen Bereichen des Dünnfilms, auf denen das Zusatzmaterial (58) nicht abgeschieden wurde, entsprechen.

## Revendications

1. Un procédé de préparation d'une matrice mère (60) pour faciliter la duplication des vidéodisques (1) comprenant:

(a) l'approvisionnement d'un substrat (20);

(b) le dépôt sous vide d'un mince film (18) du matériau sur ledit substrat (20), ledit matériau pouvant être converti de manière réversible entre un premier état de forte conductivité électrique et un second état de faible conductivité électrique, ledit film (18) étant déposé dans ledit état de faible conductivité;

(c) la conversion de zones sélectionnées dudit film (18) dudit état de faible conductivité audit état de forte conductivité selon une configuration prédéterminée (52);

(d) l'électro-déposition d'un matériau supplémentaire (58) sur la partie de ladite région dudit film (18) correspondant audit état de forte conductivité;

(e) la formation d'une couche arrière (58) continue sur ledit matériau supplémentaire (58); et

(f) la séparation de ladite couche arrière et dudit matériau supplémentaire (58) par rapport audit film (18), ladite couche arrière et ledit matériau supplémentaire constituant une première matrice mère (60).

2. Le procédé de la revendication 1 dans lequel ladite opération de dépôt dudit film mince (18) comprend le dépôt dudit film (18) jusqu'à une épaisseur comprise entre 30 et 300 nm (300Å à 3000Å).

3. Le procédé de la revendication 1 ou de la revendication 2 dans lequel ladite opération de dépôt dudit film mince (18) comprend le dépôt dudit film (18) dans un état amorphe.

4. Le procédé de la revendication 3 dans laquelle ladite opération (c) comprend la conversion dudit film amorphe déposé (18) dans la masse en un état cristallin et la conversion de région sélectionnée dudit film dudit état de forte conductivité audit état de faible conductivité selon une configuration prédéterminée.

5. Le procédé de la revendication 4 dans lequel ladite opération de conversion de régions sélectionnées dudit film (18) dudit état de forte conductivité jusqu'audit état de faible conductivité comprend la conversion desdites régions sélectionnées dudit état cristallin audit état amorphe.

6. Le procédé de la revendication 5 dans lequel ladite opération de dépôt dudit matériau supplémentaire (58) comprend le dépôt dudit matériau supplémentaire (58) uniquement sur lesdites régions se trouvant dans ledit état cristallin.

7. Le procédé selon l'une quelconque des revendications 1 à 6, dans lequel ladite opération de conversion des régions dudit film (18) dudit état de faible conductivité audit état de forte conductivité comprend la concentration d'énergie électromagnétique sur ledit film (18) selon ladite configuration prédéterminée.

8. Le procédé selon l'une quelconque des revendications 1 à 7 dans lequel la conductivité dudit film mince (18) dans ledit état de forte conductivité est approximativement supérieure de 4 ordres de grandeur à sa conductivité dans ledit état de faible conductivité.

9. Le procédé selon l'une quelconque des revendications 1 à 8 dans lequel ledit matériau supplémentaire électrodéposé (58) comprend un matériau métallique.

10. Le procédé de la revendication 9 dans lequel ledit matériau métallique (58) comprend du nickel.

11. Le procédé selon l'une quelconque des revendications 1 à 10, comprenant l'opération supplémentaire de formation d'un duplicata inversé (62) à partir de ladite première matrice mère (60) pour former une seconde matrice mère ayant une structure superficielle complémentaire.

12. Le procédé selon la revendication 11, dans lequel ladite opération de formation de ladite seconde matrice mère (62) ayant une structure de surface complémentaire comprend les opérations supplémentaires de:

(a) électro-déposition d'un autre matériau sur ledit matériau supplémentaire électrodéposé (58) de ladite matrice mère (60);

(b) formation d'une couche support continue sur au moins une partie dudit autre matériau électrodéposé; et

(c) séparation de ladite couche support continue et dudit autre matériau électrodéposé par rapport à ladite première matrice mère (60) pour former ledit duplicata inversé et créer ladite seconde matrice mère (62) de polarisation opposée.

13. Le procédé selon la revendication 12, dans lequel ladite opération de dépôt dudit autre matériau sur ledit matériau supplémentaire électrodéposé (58) de ladite première matrice mère (60) comprend le dépôt dudit autre matériau sur la partie dudit matériau supplémentaire électrodéposé (58) correspondant aux parties de forte conductivité de ladite première matrice mère (60).

14. Le procédé selon l'une des revendications 12 ou 13 dans lequel ladite opération de formation de ladite couche support continue comprend l'opération de poursuite du dépôt dudit autre matériau jusqu'à ce que ledit autre matériau déposé forme ladite couche support continue sur les régions de ladite première matrice mère (60) qui correspondent aux régions de faible conductivité dudit film mince sur lesquelles ledit matériau supplémentaire (58) n'a pas été déposé.

FIG.1

FIG. 2

FIG. 3

FIG. 4

FIG. 5

FIG. 6

FIG. 7

FIG. 8

FIG. 9